Europäisches Patentamt

European Patent Office

Office européen des brevets

(11) Veröffentlichungsnummer : **0 146 750**
**B1**

# (12) EUROPÄISCHE PATENTSCHRIFT

(45) Veröffentlichungstag der Patentschrift :
09.09.87

(51) Int. Cl.⁴ : **B 60 T 17/08**

(21) Anmeldenummer : **84113466.1**

(22) Anmeldetag : **08.11.84**

(54) **Bremseinheit für Schienenfahrzeuge.**

(30) Priorität : **09.12.83 DE 3344616**

(43) Veröffentlichungstag der Anmeldung :
**03.07.85 Patentblatt 85/27**

(45) Bekanntmachung des Hinweises auf die Patenterteilung : **09.09.87 Patentblatt 87/37**

(84) Benannte Vertragsstaaten :
**DE FR GB IT SE**

(56) Entgegenhaltungen :
**EP-A- 0 081 467**
**DE-B- 1 160 488**
**DE-B- 2 254 090**
**DE-B- 2 659 768**
**DE-B- 2 730 959**
**GB-A- 1 458 391**
**US-A- 1 760 624**
**US-A- 3 799 297**

(73) Patentinhaber : **KNORR-BREMSE AG**
**Moosacher Strasse 80 Postfach 401060**
**D-8000 München 40 (DE)**

(72) Erfinder : **Staltmeir, Josef**
**Knorrstrasse 83**
**D-8000 München 40 (DE)**
Erfinder : **Wosegien, Bernd**
**Angerweg 8**
**D-8000 München 83 (DE)**

## Beschreibung

Die Erfindung bezieht sich auf eine Bremseinheit für Schienenfahrzeuge, insbesondere Klotzbremseinheit mit einem druckmittelbeaufschlagbaren Bremskolben, der über wenigstens einen gegebenenfalls ein Teil eines Keilgetriebes bildenden Übersetzungshebel mit einer die Bremse zuspannenden Druckstange gekoppelt ist, und mit einer mechanisch, gegebenenfalls mittels eines durch ein Druckmittel spannbaren Federspeichers, betätigbaren Feststellbremseinrichtung, welche einen über einen zwei zusammenwirkende Flächen aufweisenden Druckanschlag mit dem Übersetzungshebel zusammenwirkenden Feststell-Bremshebel aufweist, wobei die zusammenwirkenden Flächen ausschließlich von der Zuspannkraft der Feststellbremseinrichtung durchsetzbar sind.

Eine derartige Klotzbremseinheit ist aus der DE-B-11 60 488 bekannt. Der Übersetzungshebel verläuft hierbei annähernd rechtwinklig zur Druckstange, der den Bremskolben beinhaltende Bremszylinder ist mit einer etwa parallel zur Druckstange verlaufenden Achsrichtung angeordnet und der Feststell-Bremshebel befindet sich etwa in Verlängerung des Übersetzungshebels, wobei er mit seinem Ende über einen schalenförmig ausgebildeten Druckanschlag die Lagerstelle zwischen dem Übersetzungshebel und dem Bremskolben zu belasten vermag, in seinem mittleren Bereich am Gehäuse der Bremseinheit eine Festpunkt-Lagerung aufweist und an seinem anderen Ende ein Auge zum Anlenken eines Festbremsgestänges aufweist. Der kleiner als der Übersetzungshebel ausgebildete Feststell-Bremshebel verläuft also im wesentlichen parallel zum Übersetzungshebel sich an diesen anschließend, wodurch eine relativ große Bauhöhe für die Klotzbremseinheit erforderlich ist. Es mag naheliegen, das am freien Auge des Feststell-Bremshebels anzulenkende Feststellbremsgestänge als Federspeicher-Bremszylinder auszubilden.

Eine weitere, den eingangs genannten Merkmalen entsprechende Bremseinheit ist aus der DE-B-2 659 768 bekannt. Der ebenfalls etwa rechtwinklig zur Druckstange verlaufende Übersetzungshebel weist hierbei an seinem freien Ende eine Keilfläche auf, welche zusammen mit einer an ihr abrollbar anliegenden Rolle ein Keilgetriebe bildet. Die Rolle ist drehbar am Ende einer Kolbenstange gehalten, welche einem mit etwa rechtwinklig zur Druckstange verlaufender Achsrichtung angeordneten Betriebsbremszylinder zugehört. Auf den Lagerungsbolzen der Rolle ist das freie Ende eines Feststell-Bremshebels aufsetzbar, der sich von der Kolbenstange seitwärts erstreckt und an seinem anderen Ende drehantreibbar gelagert ist. Die durch gegenseitige Anlage zusammenwirkenden Flächen des Feststell-Bremshebels und des Lagerungsbolzens bilden einen Druckanschlag, der ausschließlich von der Zuspannkraft der Feststellbremseinrichtung durchsetzbar ist, während das Keilgetriebe von den Zuspannkräften sowohl der Betriebsbremse wie der Feststellbremse durchsetzbar ist.

Wesentlicher Mangel dieser bekannten Klotzbremseinheiten ist, daß die Hebel-Übersetzungsverhältnisse sowohl für Betriebsbremsungen durch Druckmittelbeaufschlagen des Bremskolbens wie auch für Feststellbremsungen konstruktiv festgelegt sind, obwohl in der Praxis oft Variationen dieser Übersetzungsverhältnisse gefordert werden. So ist das Übersetzungsverhältnis des Übersetzungshebels aus der geforderten Anpresskraft des Bremsklotzes unter Berücksichtigung der Größe des Bremskolbens und des zur Verfügung stehenden Druckmitteldruckes bestimmbar, und dieses Übersetzungsverhältnis geht multipliziert mit dem Übersetzungsverhältnis des Feststell-Bremshebels in das Gestänge-Übersetzungsverhältnis für die Feststellbremse ein, wobei unter Berücksichtigung der jeweils zur Verfügung stehenden Feststell-Bremsbetätigungskraft, also beispielsweise der Kraft eines Federspeicherbremszylinders, eine Feststell-Andrückkraft für den Bremsklotz errechenbar ist, welche fahrzeugspezifischen Anforderungen genügen muß. Es ist offensichtlich, daß zur gegenseitigen Abstimmung der Übersetzungsverhältnisse für Betriebs- und Feststellbremsungen Feststell-Bremshebel mit unterschiedlichen Übersetzungsverhältnissen verwendbar sein können; da jedoch weder die Lage des Druckanschlages noch der Ort der Festpunkt-Lagerung ohne weiteres veränderbar sind, ergäben sich hierbei Verlagerungen der Anschlußstelle für das Feststellbremsgestänge bzw. der Lage des Federspeicherbremszylinders, also Änderungen der Anschlußmaße, was zu Montage-Komplikationen führt.

Aus der DE-B-22 54 090 ist eine Bremseinheit für Scheibenbremsen bekannt, bei welcher der Bremskolben und ein Kolben des Federspeichers einander in Boxeranordnung gegenüberstehen und über einen gemeinsamen Druckanschlag auf ein Ende des Übersetzungshebels einwirken. Hierbei ist überhaupt keine voneinander unabhängige Festlegung der Hebelübersetzungsverhältnisse für die Betriebsbremse und die Feststellbremse möglich.

Aus der US-A-1 760 624 ist eine Servobremseinrichtung bekannt, deren Kolben über ein einen schwenkbaren Drehhebel aufweisendes Keilgetriebe mit einer Druckstange gekoppelt ist, wobei das Übersetzungsverhältnis des Keilgetriebes sich hubabhängig ändert.

Es ist Aufgabe der Erfindung, eine Bremseinheit der eingangs genannten Art derart auszubilden, daß bei festliegendem Übersetzungsverhältnis für den Übersetzungshebel und damit die Betriebsbremse das Übersetzungsverhältnis der Feststellbremse in einfacher Weise und ohne äußere Änderung der Bremseinheit, insbesondere ohne Änderung von Anschlußmaßen, innerhalb weiter Grenzen entsprechend den jeweiligen Forderungen festlegbar ist.

Diese Aufgabe wird nach der Erfindung dadurch gelöst, daß der von den zwei Flächen gebildete Druckanschlag als Keilgetriebe ausgebildet ist. Durch entsprechende Wahl der Keilsteigung ist es dabei möglich, das Übersetzungsverhältnis des Keilgetriebes und damit das für die Feststellbremse wirksame Übersetzungsverhältnis innerhalb weiter Grenzen festzulegen.

Falls nach einem weiteren Merkmal der Erfindung das Keilgetriebe ein sich über seinen Hub änderndes Übersetzungsverhältnis aufweist, kann in einfacher Weise durch entsprechende, hubabhängige Übersetzungsverhältnis-Änderung ein Schnellanlegen der Bremse, eine Kompensation der mit dem Hub nachlassenden Betätigungskraft eines Federspeicher kompensiert und/oder eine progressive Übersetzung mit hubabhängig sich verstärkender Betätigungskraft für die Bremse erzielt werden.

In den weiteren Unteransprüchen sind weitere, vorteilhafte Ausgestaltungsmöglichkeiten für eine nach der Erfindung ausgebildete Bremseinheit angegeben.

In der Zeichnung ist ein Ausführungsbeispiel für eine nach der Erfindung ausgebildete Klotzbremseinheit schematisch dargestellt, und zwar zeigt :

Figur 1 ein Schnittbild durch die Klotzbremseinheit und

Figuren 2 und 3 je eine Einzelheit für abgewandelte Ausführungsformen.

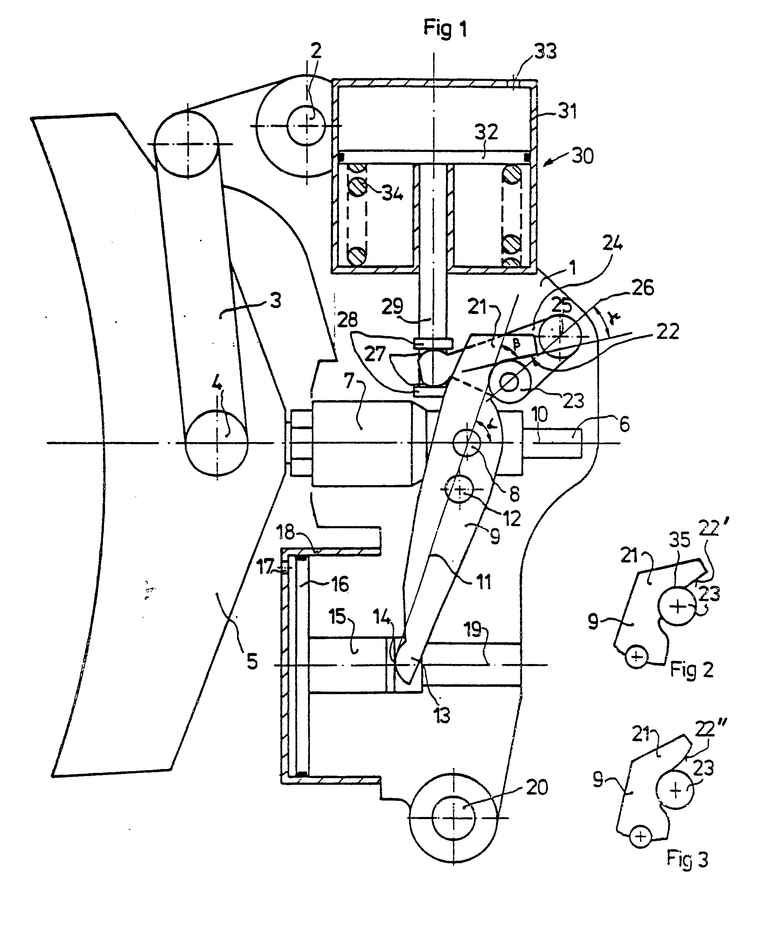

Gemäß Fig. 1 weist die Bremsklotzeinheit ein Gehäuse 1 auf, an dessen oberem Ende nahe einer Lagerstelle 2 ein im wesentlichen vertikal nach unten verlaufender Pendelhebel 3 angelenkt ist. Das untere Ende des Pendelhebels 3 ist über eine Lagerung 4 mit einem Bremsklotzträger 5 und einer Druckstange 6 verbunden. Die im wesentlichen waagrecht verlaufende Druckstange 6 ist mit einem üblichen, hier nicht im einzelnen dargestellten Gestängesteller 7 ausgestattet. An ihrem dem Bremsklotzträger 5 abgewandten Bereich weist die Druckstange 6 eine lagerartige Anlenkung 8 auf, mittels welcher sie schwenkbar mit einem Übersetzungshebel 9 verbunden ist. Der Übersetzungshebel 9 verläuft zur Druckstange 6 wenigstens grob angenähert rechtwinklig, im Ausführungsbeispiel schneidet die Achse 10 der Druckstange 6 eine Ebene 11, welche die Längsrichtung des Übersetzungshebels 9 beinhaltet, im Lösezustand der Klotzbremseinheit unter einem Winkel $\alpha$ von etwa 70°. Dicht unterhalb der Anlenkung 8 weist der Übersetzungshebel 9 eine Festpunkt-Lagerung 12 auf, mittels welcher er drehbar am Gehäuse 1 angelenkt ist. Am unteren Hebelende 13 ist der Übersetzungshebel 9 mittels einer Anschlagkupplung 14 mit der Kolbenstange 15 eines Bremskolbens 16 gekoppelt. Der Bremskolben 16 ist in einem über einen Leitungsanschluß 17 druckmittelbeaufschlagbaren Zylinder 18 geführt, der seinerseits am Gehäuse 1 festgehalten ist. Die Achsrichtung 19 des Zylinders 18 verläuft beim Ausführungsbeispiel etwa horizontal, es kann jedoch auch zum Vermeiden von Wasseransammlungen zweckmäßig sein, den Zylinder 18 derart anzuordnen, daß die Achsrichtung 19 in Entfernungsrichtung vom Bremskolben 16 um einen geringen Winkel zur Horizontalen geneigt schräg nach abwärts verläuft, der Neigungswinkel kann dabei etwa 10° betragen. Dicht unterhalb des Zylinders 18 ist das Gehäuse 1 mit einer Lagerstelle 20 versehen ; mittels der beiden Lagerstellen 2 und 20 ist das Gehäuse 1 an einem Rahmen eines Schienenfahrzeuges befestigbar, bei beidseitig eines abzubremsenden Rades vorgesehener Anordnung von Bremsklötzen kann das Gehäuse 1 jedoch auch mittels der Lagerstelle 2 schwenkbar am Schienenfahrzeugrahmen angelenkt werden und die Lagerstelle 20 dient der Anlenkung einer das Fahrzeugrad überkreuzenden Zugstange, welche in üblicher Weise mit einem einen zweiten Bremsklotz tragenden, bezogen auf das Rad andersseitigen Bremshebel verbunden ist. Oberhalb der Anlenkung 8 ist das obere Hebelende 21 des Übersetzungshebels 9 nach der dem Bremskolben 16 abgewandten Seite abgekröpft ausgebildet, wobei es auf seiner der Druckstange 6 zugewandten Seite eine Keilfläche 22 aufweist. An der Keilfläche 22 liegt eine Rolle 23 an, die drehbar an einem vom Hebelende 21 teilweise übergriffenen Feststell-Bremshebel 24 gelagert ist ; die Keilfläche 22 und die Rolle 23 bilden somit miteinander ein Keilgetriebe 22, 23. Die Ebene 11 des Übersetzungshebels 9 verläuft wenigstens angenähert durch die Anschlagkupplung 14, die Festpunktlagerung 12, die Anlenkung 8 und die Anlagestelle der Rolle 23 am Übersetzungshebel 9. Zur Keilfläche 22 verläuft die Ebene 11 unter einem Winkel $\beta$, welcher einen Betrag von etwa 60° bis 80° aufweisen kann. Der Feststell-Bremshebel 24 weist in Aufsicht eine etwa einem stumpfwinkligen Dreieck entsprechende Form auf, wobei sich die Rolle 23 nahe der stumpfwinkligen Dreiecksecke befindet. Dicht seitlich vor dem freien Hebelende, etwas oberhalb der Ebene der Keilfläche 22, ist der Feststell-Bremshebel 24 mittels einer Festpunkt-Lagerung 25 schwenkbar am Gehäuse 1 angelenkt. Eine durch die Festpunkt-Lagerung 25 und die Lagerung der Rolle 23 gelegte Ebene 26 verläuft zur Ebene der Keilfläche 22 unter einem Winkel $\mu$ von etwa 30°. Im Bereich der dritten Dreiecksecke weist der Feststell-Bremshebel 24 gerundete Lagerflächen 27 auf, mit welchen er zwischen zwei Flansche 28 einer Zugstange 29 greift, welche etwa rechtwinklig zur Druckstange 10 verläuft. Die Zugstange 29 stellt die Kolbenstange eines Fedespeicherzylinders 30 dar, welcher fest am Gehäuse 1 angeordnet ist. Der Federspeicherzylinder 30 beinhaltet in einem fest mit dem Gehäuse 1 verbundenen Zylindergehäuse 31 einen Kolben 32, welcher durch einen Leitungsanschluß 33 im Zylindergehäuse 31 einerseits druckmittelbeaufschlagbar und andererseits ständig von der Kraft einer Speicherfeder 34 belastet ist. Die Zugstange 29 ist mit dem Kolben 32 fest verbunden. Insgesamt ergibt sich eine Anordnung, bei welcher die Speicherfeder 34 den Feststell-Bremshebel 24 in Drehrichtung um die Festpunkt-Lagerung 25 weg von der Druckstange 6 und damit in Andrückrichtung der Rolle 23 an die Keilfläche 22 belastet.

Bei Betriebsbremsungen durch Beaufschlagen des Bremskolbens 16 mit einem als Bremszylinderdruck zu bezeichnenden Druckmitteldruck arbeitet die Klotzbremseinheit in üblicher Weise, der Bremskolben 16 wird dabei mit der Kolbenstange 15 gemäß Fig. 1 nach rechts verschoben, wobei er den Übersetzungshebel 9 um die Festpunkt-Lagerung 12 entgegen dem Uhrzeigersinn dreht. Der sich bei dieser Drehung von der Rolle 23 abhebende Übersetzungshebel 9 drückt dabei über die Anlenkung 8 die Druckstange 6 nach links, wodurch ein nicht dargestellter, im Bremsklotzträger 5 gehaltener Bremsklotz an das ebenfalls nicht dargestellte, abzubremsende Fahrzeugrad abgedrückt wird. Der Kolben 32 wird dabei mittels eines durch den Leitungsanschluß 33 zugeführten Druckmittels in seiner dargestellten, die Speicherfeder 24 gespannt haltenden Lage gehalten. Beim nachfolgenden Lösen spielen sich entsprechend umgekehrte Vorgänge ab.

Zum Betätigen der Feststellbremse wird über den Leitungsanschluß 33 der im Zylindergehäuse 31 herrschenden Druckmitteldruck abgebaut, so daß die Speicherfeder 34 unter geringfügiger Entspannung den Kolben 32 anzuheben vermag. Die Zugstange 29 dreht dabei vermittels der durch die Lagerflächen 27 und Flansche 28 bewirkten Anlenkung den Feststell-Bremshebel 24 um die Festpunkt-Lagerung 25 im Uhrzeigersinn, wobei die Rolle 23 über die Keilfläche 22 abrollt und hierbei den Übersetzungshebel 9 um die Festpunkt-Lagerung 12 entgegen dem Uhrzeigersinn dreht ; dabei löst sich die Anschlagkupplung 14, so daß der Bremskolben 16 in Ruhe verbleiben kann, und über die Anlenkung 8 wird, wie bereits vorstehend beschrieben, die Druckstange 6 gemäß Fig. 1 nach links gedrückt. Während dieser Drehbewegungen des Feststell-Bremshebels 24 und des Übersetzungshebels 9 ändern sich die Bewegungsrichtung der Rolle 23 und die Lage der Keilfläche 22 derart zueinander, daß das aus beiden gebildete Keilgetriebe 22, 23 eine Steigerung seines Übersetzungsfaktors erfährt ; die Anordnung ist derart getroffen, daß durch diese Steigerung des Übersetzungsfaktors die sich durch die teilweise Entspannung vermindernde Kraft der Speicherfeder 34 kompensiert wird, der Übersetzungshebel 9 also ein von der Entspannung der Speicherfeder 34 unabhängiges, etwa konstantes Drehmoment entgegen dem Uhrzeigersinn erfährt. Hierdurch wird erreicht, daß, unabhängig von der Größe des Bremshubes, die Feststellbremse stets eine wenigstens angenähert konstant bleibende Feststell-Bremskraft auszuüben vermag. Es ist jedoch darauf hinzuweisen, daß das Keilgetriebe auch andersartig ausgebildet werden kann, wie später beschrieben ist.

Bei der Klotzbremseinheit ist somit durch den Übersetzungshebel 9 mit seinem Übersetzungsverhältnis das für die vermittels des Bremskolbens 16 betätigbare Betriebsbremse wirksame Übersetzungsverhältnis festgelegt, während für die über den Federspeicherzylinder 30 betätigbare Feststellbremseinrichtung zusätzlich das durch das Keilgetriebe 22, 23 bestimmte Übersetzungsverhältnis wirksam ist. Durch Änderung des Übersetzungsverhältnisses des Keilgetriebes 22, 23 kann in einfacher Weise bei konstant bleibenden Übersetzungsverhältnis für die Betriebsbremse das für die Feststellbremseinrichtung wirksame Übersetzungsverhältnis den jeweiligen Erfordernissen angepaßt werden. In einfacher Weise kann das Übersetzungsverhältnis des Keilgetriebes 22, 23 durch entsprechende Wahl des Winkels β, also des Keilflächen-Winkels festgelegt werden, für unterschiedliche Übersetzungsverhältnisse sind also lediglich verschiedene Übersetzungshebel 9 mit unterschiedlichem Keilflächen-Winkel β in die Klotzbremseinheit einzusetzen. Selbstverständlich kann auch in anderer Weise, durch Änderung des Feststell-Bremshebels 24 und insbesondere dessen Lage durch Verchieben der Flansche 28 auf der Zugstange 29 unter gleichzeitiger Anpassung der Lage der Keilfläche 22, das Übersetzungsverhältnis des Keilgetriebes 22, 23 dem jeweils erforderlichen Wert angepaßt werden, wobei der Aufwand jedoch etwas größer als bei der vorstehend beschriebenen Art ist. Ein weiterer Vorteil der Anordnung ist noch darin zu sehen, daß durch Verschieben der Flansche 28 auf der Zugstange 29 die Vorspannung der Speicherfeder 34 justierbar ist, so daß Speicherfedern mit innerhalb eines großen Toleranzbereiches liegenden Federwerten verwendbar sind. Es ist wesentlich, daß weder die Anpassung des Übersetzungsverhältnisses des Keilgetriebes 22, 23 noch die Justierung der Kraft der Speicherfeder 34 irgendwelche äußere Maßänderungen an der Klotzbremseinheit bedingt, insbesondere bleiben alle Anschlußmaße hierbei konstant. In Abänderung zum vorstehend beschriebenen Ausführungsbeispiel muß zur Betätigung der Feststellbremse kein Federspeicherzylinder 30 vorgesehen sein, die Zugstange 29 kann vielmehr aus der Bremsklotzeinheit herausgeführt und mit einem außerhalb der Klotzbremseinheit befindlichen, üblichen Hand- oder Feststellbremsgestänge gekoppelt werden : auch bei einer derartigen, im Prinzip der aus der bereits erwähnten DE-AS-11 60 488 ähnelnden Anschluß-Ausbildung wirkt sich besonders vorteilhaft die Anschlußmaße nicht ändernde Übersetzungsverhältnis-Änderungsmöglichkeit für die Feststellbremse aus. Vorteilhaft ist weiterhin, daß bei Betätigen einer der Bremsen — Betriebsbremse oder Feststellbremse — die der jeweils anderen Bremse zugehörenden Betätigungsorgane durch Abheben der Anschlagkupplung 14 bzw. des Keilgetriebes 22, 23 in Ruhe verbleiben.

Wie vorstehend bereits angedeutet, bietet die Einordnung eines Keilgetriebes in das der Feststellbremse zugehörende Gestänge weitere Möglichkeiten :

So muß die Keilfläche 22 nicht eben, wie in Fig. 1 dargestellt, ausgebildet werden, sondern sie kann auch andersartig gestaltet werden. Fig. 2 und Fig. 3 zeigen hierzu zwei unterschiedliche Ausführungsbeispiele, wozu in diese Figuren jeweils ein Teil des Übersetzungshebels 9 sowie die Rolle 23 dargestellt ist.

Gemäß Fig. 2 kann im Hebelende 21 die Keilfläche 22' mit einer Vertiefung 35 versehen sein, in welcher die Rolle 23 im Lösezustand der Bremsklotzeinheit einfällt. Beim Betätigen der Feststellbremseinrichtung bewirkt bei dieser Anordnung die Rolle 23 bei ihrem Austreten aus der Vertiefung 35 anfänglich eine rasche Drehung des Übersetzungshebels 9, wodurch ein rasches Bremsenanlegen erfolgt. Anschließend, sowie die Rolle 23 den ebenen Abschnitt der Keilfläche 22' erreicht, erfolgt ein langsameres Weiterdrehen des Übersetzungshebels 9 zum festen Zuspannen der Bremse. Nach diesem Ausführungsbeispiel weist also das Keilgetriebe 22', 23 einen Übersetzungswechsel mit anfänglich niedriger und nachfolgend hoher Übersetzung zum anfänglichen Schnellanlegen der Bremsen und nachfolgenden, kraftvollen Zuspannen auf. Durch entsprechende, konstruktive Ausbildung ist hierbei lediglich darauf zu achten, daß bei Betriebsbremsungen ein ungehindertes Abheben des Hebelendes 21 mit der Keilfläche 22' von der Rolle 23 möglich ist.

Weiterhin ist es möglich, gemäß Fig. 3 die Keilfläche 22" am Hebelende 21 gewölbt auszubilden, wobei die Wölbung eine stetige Änderung des Übersetzungsverhältnisses des Keilgetriebes 22", 23 bewirkt. Bei der dargestellten, konvexen Wölbung der Keilflächen 22" ergibt sich ein mit dem Hub anwachsendes Übersetzungsverhältnis, also eine progressive Übersetzung, welche zum einen zum Kompensieren des Abfalles der Speicherfederkraft ausgenützt und zum anderen auch zum Erzielen einer progressiven Bremswirkung verwendet werden kann. Falls es besondere Umstände bedingen, kann durch konkave Wölbung der Keilfläche auch eine degressive Übersetzung am Keilgetriebe eingestellt werden. Selbstverständlich ist es möglich, die Schnellanlegung gemäß Fig. 2 mit einer stetigen Übersetzungsänderung gemäß Fig. 3 durch entsprechende Gestaltung der Keilfläche zu kompensieren.

In Abwandlung der vorstehend beschriebenen Ausführungsbeispiele ist es selbstverständlich auch möglich, den Zylinder 18 und/oder den Federspeicherzylinder 30 in anderen Lagen am Gehäuse 1 anzuordnen, insbesondere können, wie bereits für den Zylinder 18 erwähnt, Schräganordnungen zum Vermeiden von Wasseransammlungen auch unter Berücksichtigung von Schwenkbewegungen des Gehäuses 1 um die Lagerstelle 2 und/oder zur verbesserten Ausnutzung des Bauraumes zweckmäßig sein. Dabei kann es zweckmäßig sein, den Feststell-Bremshebel 24 in einen Winkelhebel aufzulösen, an dessen einem Schenkelende die einzuleitende Feststell-Bremskraft angreift und an dessen anderem Schenkelende die Rolle 23 angeordnet ist.

Insbesondere bei Ankupplung eines äußeren Feststell- bzw. Handbremsgestänges kann es zweckmäßig sein, den die Anlenkstelle für das Einleiten der Feststell-Bremskraft aufweisenden Schenkel des Feststell-Bremshebels annähernd vertikal anzuordnen, so daß ein übliches, etwa horizontal verlaufende Kräfte übertragendes, äußeres Feststell- bzw. Handbremsgestänge ohne weitere Umlenkerfordernisse anlenkbar ist.

In weiterer Abänderung ist es auch möglich, die Zuordnung von Keilfläche und Rolle zum Übersetzungshebel 9 bzw. Feststell-Bremshebel 24 zu vertauschen, derart, daß der Übersetzungshebel 9 mit der Rolle und der Feststell-Bremshebel 24 mit der Keilfläche versehen wird. Auch bei dieser Vertauschung sind alle vorstehend beschriebenen Ausführungsvariationen möglich. Weiterhin ist die Einordnung des Keilgetriebes in die Feststellbremseinrichtung nicht nur bei Klotzbremseinheiten, sondern bei Bremseinheiten für Scheibenbremsen in entsprechender Weise möglich.

Bezugszeichenliste

  1 Gehäuse
  2 Lagerstelle
  3 Pendelhebel
  4 Lagerung
  5 Bremsklotzgestänge
  6 Druckstange
  7 Gestängesteller
  8 Anlenkung
  9 Übersetzungshebel
 10 Achse
 11 Ebene
 12 Festpunkt-Lagerung
 13 Hebelende
 14 Anschlagkupplung
 15 Kolbenstange
 16 Bremskolben
 17 Leitungsanschluß
 18 Zylinder
 19 Achsrichtung
 20 Lagerstelle
 21 Hebelende
 22 Keilfläche
 22' Keilfläche
 22" Keilfläche
 23 Rolle
 24 Feststell-Bremshebel
 22, 23 Keilgetriebe
 25 Festpunkt-Lagerung
 26 Ebene
 27 Lagerfläche
 28 Flansch
 29 Zugstange
 30 Federspeicherzylinder
 31 Zylindergehäuse
 32 Kolben
 33 Leitungsanschluß
 34 Speicherfeder
 35 Vertiefung
  α Winkel
  β Winkel
  γ Winkel

## Patentansprüche

1. Bremseinheit für Schienenfahrzeuge, insbesondere Klotzbremseinheit, mit einem druckmittelbeaufschlagbaren Bremskolben (16), der über wenigstens einen gegebenenfalls ein Teil eines Keilgetriebes bildenden Übersetzungshebel (9) mit einer die Bremse zuspannenden Druckstange (6) gekoppelt ist, und mit einer mechanisch, gegebenenfalls mittels eines durch ein Druckmittel spannbaren Federspeichers (30), betätigbaren Feststellbremseinrichtung, welche einen über einen zwei zusammenwirkende Flächen aufweisenden Druckanschlag mit dem Übersetzungshebel (9) zusammenwirkenden Feststell-Bremshebel (24) aufweist, wobei die zusammenwirkenden Flächen ausschließlich von der Zuspannkraft der Feststellbremseinrichtung durchsetzbar sind, dadurch gekennzeichnet, daß der von den zwei Flächen gebildete Druckanschlag als Keilgetriebe (22, 23) ausgebildet ist.

2. Bremseinheit nach Anspruch 1, dadurch gekennzeichnet, daß einer der Hebel — Feststell-Bremshebel (24) oder Übersetzungshebel — eine drehbare Rolle (23) trägt, die abrollbar und abhebbar auf einer Keilfläche (22, 22', 22") des anderen Hebels — Übersetzungshebel (9) oder Feststell-Bremshebel — aufliegt.

3. Bremseinheit nach Anspruch 1 oder 2, dadurch gekennzeichnet, daß das Keilgetriebe (22, 23) ein sich über seinen Hub änderndes Übersetzungsverhältnis aufweist.

4. Bremseinheit nach Anspruch 1, 2 oder 3, dadurch gekennzeichnet, daß die Längsrichtungen des Feststell-Bremshebels (24) und des Übersetzungshebels (9) im wesentlichen annähernd rechtwinklig zueinander verlaufen.

5. Bremseinheit nach Anspruch 4, dadurch gekennzeichnet, daß der Übersetzungshebel (9) zweiarmig ausgebildet ist, wobei der Bremskolben (16) mit einem Hebelende (13) gekoppelt ist, das Keilgetriebe (22, 23) am anderen Hebelende (21) angreift und sich im mittleren Hebelbereich mit Abstand zueinander eine Festpunkt-Lagerung (12) und eine Anlenkung (8) für die Druckstange (6) befinden.

6. Bremseinheit nach den Ansprüchen 1 bis 5, dadurch gekennzeichnet, daß der kürzer als der Übersetzungshebel (9) ausgebildete Feststell-Bremshebel (24) an seinem einen Ende eine Festpunkt-Lagerung (25) aufweist, in seinem mittleren Bereich die Rolle (23) trägt und an seinem anderen Ende eine Lagerstelle (27) für eine der Feststell-Bremseinrichtung zugehörende, im wesentlichen rechtwinklig zur Druckstange (6) verlaufende Zugstange (29) trägt, und daß der Übersetzungshebel (9) an seinem den Feststell-Bremshebel (24) übergreifenden Ende die Keilfläche (22, 22', 22") trägt.

7. Bremseinheit nach Anspruch 6, dadurch gekennzeichnet, daß der Feststell-Bremshebel (24) eine stumpfwinklige Dreiecksform aufweist, wobei sich die Rolle (23) nahe der stumpfwinkligen Dreiecksecke befindet.

8. Bremseinheit nach Anspruch 7, dadurch gekennzeichnet, daß im Lösezustand sich alle Anlenk- bzw. Koppelstellen (14, 12, 8) des Übersetzungshebels (9) annähernd in einer ersten Ebene (11) befinden, welche von der Druckstange (6) unter einem Winkel α von etwa 70° durchsetzt wird und zu welcher die Keilfläche (22, 22', 22") in einem Winkel β von etwa 60° bis 80° verläuft.

9. Bremseinheit nach Anspruch 6, 7 oder 8, dadurch gekennzeichnet, daß die Achsrichtungen des Bremskolbens (16) und eines die Zugstange (29) aufweisenden Federspeicherzylinders (30) zueinander wenigstens annähernd rechtwinklig verlaufen.

## Claims

1. Brake unit for rail vehicles, in particular a block brake unit, having a pressure-medium-actuatable brake piston (16) which is coupled, by means of at least one transmission lever (9) possibly forming part of a wedge-type drive means, to a connecting rod (6) clamping the brake, and having a locking brake device which can be mechanically actuated, possibly by means of a spring energy store (30) which can be loaded by a pressure medium, which device has a locking brake lever (24) co-operating with the transmission lever (9) by means of a pressure abutment having two co-operating surfaces, wherein the co-operating surfaces can be activated only by the clamping force of the locking brake device, characterised in that the pressure abutment formed by the two surfaces is constructed as a wedge-type drive means (22, 23).

2. Brake unit according to claim 1, characterised in that one of the levers — locking brake lever (24) or transmission lever — has a rotatable roller (23) which rests against a wedge surface (22, 22', 22') of the other lever — transmission lever (9) or locking brake lever — so that it can be rolled or lifted off.

3. Brake unit according to claim 1 or 2, characterised in that the wedge-type drive means (22, 23) has a transmission ratio which varies with its stroke.

4. Brake unit according to claim 1, 2 or 3, characterised in that the longitudinal directions of the locking brake lever (24) and of the transmission lever (9) extend substantially approximately at right angles to each other.

5. Brake unit according to claim 4, characterised in that the transmission lever (9) is constructed with two arms, wherein the brake piston (16) is coupled to one end (13) of the lever, the wedge-type drive means (22, 23) acts on the other end of the lever (21), and in the central lever area a fixed bearing point (12) and a pivot (8) for the connecting rod (6) are located spaced apart from each other.

6. Brake unit according to claims 1 to 5, characterised in that the locking brake lever (24), which is shorter than the transmission lever (9), has a fixed bearing point (25) at one end, in the central area carries the roller (23), and at its other end carries a bearing point (27) for a draw rod (29) belonging to the locking brake device and extending substantially at right angles to the connecting rod (6), and in that the transmission lever (9) carries the wedge surface (22, 22', 22') at the end overlapping the locking brake lever (24).

7. Brake unit according to claim 6, characterised in that the locking brake lever (24) has an obtuse-angled triangular shape wherein the roller (23) is located near the obtuse-angled triangular corner.

8. Brake unit according to claim 7, characterised in that in the released state all the pivoting or coupling points (14, 12, 8) of the transmission lever (9) are located approximately in a first plane (11) which is crossed by the connecting rod (6) at an angle α of approximately 70° and to which the wedge surface (22, 22', 22") extends at an angle β of approximately 60° to 80°.

9. Brake unit according to claim 6, 7 or 8, characterised in that the axes of the brake piston (16) and a spring-loaded cylinder (30) holding the draw rod (29) extend at least approximately at right angles to each other.

## Revendications

1. Unité de freinage pour des véhicules sur rails, en particulier unité de freinage à sabots, avec un piston de frein (16) susceptible d'être chargé en milieu sous pression et qui est accouplé, par l'intermédiaire d'au moins un levier de transmission (9) qui forme éventuellement une partie d'une transmission à clavette, à une tige de pression (6) serrant le frein, et avec un dispositif mécanique de freinage de stationnement susceptible d'être commandé éventuellement par l'intermédiaire d'un ressort accumulateur (30) qui peut être armé par un milieu sous pression, ledit dispositif de freinage de stationnement comportant un levier de frein de stationnement (24) coagissant avec le levier de transmission (9), par l'intermédiaire d'une butée de pression comportant deux surfaces qui coagissent entre elles, et lesdites surfaces qui coagissent entre elles ne pouvant coagir que sous l'effet de la force de serrage du dispositif de freinage de stationnement, caractérisée par le fait que la butée de pression qui est formée par les deux surfaces est réalisée sous la forme d'une transmission à coins (22, 23).

2. Unité de freinage selon la revendication 1, caractérisée par le fait que l'un des leviers — levier de freinage de stationnement (24) ou levier de transmission — porte un galet tournant (23) qui porte, de manière à pouvoir y rouler ou d'en être soulevé, sur une surface cunéiforme (22, 22', 22") de l'autre levier — levier de transmission (9) ou levier de freinage de stationnement.

3. Unité de freinage selon la revendication 1 ou 2, caractérisée par le fait que la transmission à coins (22, 23) présente un rapport de transmission qui change avec la course.

4. Unité de freinage selon la revendication 1, 2 ou 3, caractérisée par le fait que les directions longitudinales du levier de freinage de stationnement (24) et du levier de transmission (9) s'étendent sensiblement à angle droit entre eux.

5. Unité de freinage selon la revendication 4, caractérisée par le fait que le levier de transmission (9) est réalisé sous la forme d'un levier à deux bras, le piston de frein (16) étant articulé avec une extrémité (13) du levier, la transmission à coins (22, 23) attaquant l'autre extrémité (21) du levier, alors que dans la partie médiane et à distance l'un de l'autre, sont prévus un montage à point fixe (12) et une articulation (8) pour la tige de pression (6).

6. Unité de freinage selon les revendications 1 à 5, caractérisée par le fait que le levier de freinage de stationnement (24) qui est plus court que le levier de transmission, comporte à l'une de ses extrémités un montage à point fixe (25), porte dans sa partie médiane le galet (23), et porte à son autre extrémité un emplacement de montage pour une tige de traction (29) qui appartient au dispositif de freinage de stationnement et qui s'étend sensiblement à angle droit par rapport à la tige de pression, et que le levier de transmission (9) porte la surface cunéiforme (22, 22', 22") à son extrémité qui passe sur le levier de freinage de stationnement (24).

7. Unité de freinage selon la revendication 6, caractérisée par le fait que le levier de freinage de stationnement (24) possède la forme d'un triangle obtus, le galet (23) se situant près du sommet obtus.

8. Unité de freinage selon la revendication 7, caractérisée par le fait qu'à l'état de desserrage tous les emplacements d'articulation ou de couplage (14, 12, 18) du levier de transmission (9) se trouvent sensiblement dans un premier plan (11) traversé par la tige de pression (6) sous un angle α d'environ 70° et par rapport auquel la surface cunéiforme (22, 22', 22") s'étend suivant un angle β d'environ 60°-80°.

9. Unité de freinage selon la revendication 6, 7 ou 8, caractérisée par le fait que les directions axiales du piston de freinage (16) et d'un cylindre à ressort accumulateur (30) s'étendent entre elles au moins approximativement selon un angle droit.

Fig 1

Fig 2

Fig 3